(19) Europäisches Patentamt
European Patent Office
Office européen des brevets

(11) **EP 2 848 899 B1**

(12) **EUROPÄISCHE PATENTSCHRIFT**

(45) Veröffentlichungstag und Bekanntmachung des Hinweises auf die Patenterteilung:
**08.06.2016   Patentblatt 2016/23**

(51) Int Cl.:
***G01D 5/38*** *(2006.01)*

(21) Anmeldenummer: **14182781.6**

(22) Anmeldetag: **29.08.2014**

(54) **Optische Positionsmesseinrichtung**

Optical positioning device

Dispositif optique de mesure de position

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.09.2013   DE 102013014914**
**13.05.2014   DE 102014208988**

(43) Veröffentlichungstag der Anmeldung:
**18.03.2015   Patentblatt 2015/12**

(73) Patentinhaber: **Dr. Johannes Heidenhain GmbH 83301 Traunreut (DE)**

(72) Erfinder: **Holzapfel, Wolfgang 83119 Obing (DE)**

(56) Entgegenhaltungen:
**EP-A1- 2 565 578          EP-A2- 1 901 041**
**DE-A1-102007 023 300**

EP 2 848 899 B1

**Beschreibung**

## GEBIET DER TECHNIK

Die vorliegende Erfindung betrifft eine optische Positionsmesseinrichtung, die zur hochgenauen Bestimmung der Relativposition zweier zueinander beweglicher Objekte geeignet ist.

## STAND DER TECHNIK

Zur Positionierung von planaren Objekten, beispielsweise Wafer in Halbleiter-Fertigungseinrichtungen, werden oftmals sog. XY-Tische eingesetzt. Die planaren Objekte liegen dabei auf Schlitten, die in den linearen Freiheitsgraden X, Y und teilweise auch in einem rotatorischen Freiheitgrad Rz bewegt werden können, d.h. in allen sog. "in-plane-Freiheitsgraden". Mit X und Y werden hierbei die senkrecht zueinander orientierten Bewegungsrichtungen des Schlittens in der Bewegungsebene bezeichnet, senkrecht hierzu ist eine Z-Achse orientiert. Der rotatorische Freiheitsgrad Rz des Objekts resultiert somit aus einer möglichen Rotationsbewegung des Schlittens um die Z-Achse.

Die Bestimmung der Schlittenposition erfolgt oftmals mittels gitterbasierter optischer Positionsmesseinrichtungen, die nachfolgend auch als Encoder bezeichnet werden und bei denen eine ein- oder zweidimensionale Maßverkörperung mittels ein oder mehrerer Abtastköpfe optisch abgetastet wird. Zur Erzeugung hochauflösender Positionssignale werden in derartigen optischen Positionsmesseinrichtungen bevorzugt interferentielle Abtastprinzipien eingesetzt, bei denen ein von einer Lichtquelle emittiertes Strahlenbündel in mindestens zwei Teilstrahlenbündel aufgespalten und nach ein- oder mehrmaligem Beaufschlagen der Maßverkörperung interferierend zur Überlagerung gebracht werden.

Beim Einsatz eines XY-Tisches in einer Maschine muss das zu bewegende Objekt üblicherweise relativ zu einem ortsfesten Werkzeug oder Sensor positioniert werden. Über das Werkzeug bzw. den Sensor ist dabei ein Werkzeugpunkt definiert, der nachfolgend als Tool Center Point TCP bezeichnet wird und dessen Position relativ zum Objekt bestimmt werden muss. Ein geringer effektiver Abstand der Messpunkte der eingesetzten Positionsmesseinrichtungen vom TCP der Maschine ist dabei eine wichtige Voraussetzung, damit Führungsfehler des Schlittens nicht die Messgenauigkeit bei der Positionsbestimmung beeinträchtigen. Diese Voraussetzung ist als sog. Abbe-Bedingung bekannt und besagt, dass der effektive Messpunkt einer Positionsmessung in Messrichtung mit dem TCP fluchten muss. Ein lateraler Abstand quer zur Messrichtung zwischen dem effektiven Messpunkt und dem TCP wird als Abbe-Abstand bezeichnet; dieser sollte idealerweise Null sein.

Der effektive Messpunkt einer Positionsmesseinrichtung wird mitunter auch als neutraler Drehpunkt bezeichnet, da Kippungen des Abtastkopfes oder der Maßverkörperung einer Positionsmesseinrichtung um den neutralen Drehpunkt in linearer Näherung nicht zu einer Verschiebung des Positionsmesswertes und damit zu einem Fehler bei der Positionsbestimmung führen.

Wenn für die Positionsmessung zwei Positionsmesseinrichtungen bzw. Encoder mit gleicher Messrichtung eingesetzt werden, deren Abtastköpfe senkrecht zur gemeinsamen Messrichtung beabstandet angeordnet sind, dann kann durch eine gewichtete Mittelwertbildung der beiden Positionsmesswerte der effektive Messpunkt entlang der Verbindungslinie beider Messpunkte verschoben werden. Entsprechend ist es möglich, durch drei ortsfeste Abtastköpfe, von denen zwei die Messrichtung Y und einer die Messrichtung X eines Schlittens erfassen, durch Linearkombinationen der drei Positionsmesswerte die effektiven Messpunkte für die Positionsbestimmung beliebig in der XY-Ebene durch die drei effektiven Messpunkte zu verschieben. Diese XY-Ebene wird daher im Folgenden als effektive Messebene der drei Abtastköpfe bzw. der Positionsmesseinrichtungen bezeichnet. Voraussetzung dabei ist nur, dass die beiden Abtastköpfe mit derselben Messrichtung quer zu deren Messrichtung versetzt sind und dass alle effektiven Messpunkte der drei Abtastköpfe in einer gemeinsamen Ebene parallel zu den beiden Messrichtungen liegen. Durch die Wahl der oben erwähnten Linearkombinationen werden die effektiven Messpunkte so in der effektiven Messebene verschoben, dass sie für beide Messrichtungen jeweils einen minimalen Abbe-Abstand aufweisen. Damit liegt der effektive Messpunkt an derselben X- und Y-Position wie der TCP. Nur ein Abbe-Abstand in Z-Richtung kann bisher nicht eliminiert werden. Eine derartige Positionsbestimmung mit drei ortsfesten Abtastköpfen ist insbesondere in Verbindung mit zweidimensionalen Kreuzgitter-Maßverkörperungen bereits bekannt. Analog hierzu ist es aber auch möglich, dass die Abtastköpfe gemeinsam am beweglichen Schlitten befestigt sind und eine ortsfest angeordnete Kreuzgitter-Maßverkörperung abtasten.

Aus der WO 2011/068254 A1 ist ein XY-Tisch bekannt, der eine als Kreuzgitter ausgebildete Maßverkörperung auf der Unterseite des Schlittens umfasst, die mit dem Schlitten bewegt wird und von drei ortsfesten Abtastköpfen, die unter dem Schlitten angebracht sind, optisch abgetastet wird. Zwei der drei ortsfesten Abtastköpfe messen wie oben beschrieben entlang der Richtung Y, der dritte Abtastkopf entlang der Richtung X. Damit ist eine genaue in-plane-Messung des XY-Tisches in der effektiven Messebene der Encoder möglich. Aufgrund der verwendeten Abtastoptik der Encoder liegen die effektiven Messpunkte und damit die effektive Messebene der Encoder allerdings in der Ebene der Kreuzgitter-Maßverkörperung. Der TCP dagegen liegt auf der Oberseite des Objekts bzw. Wafers, der auf dem Schlitten angeordnet ist und weist damit einen großen Abbe-Abstand in Z-Richtung zur darunterliegenden effektiven Messebene auf. Eine hochgenaue Messung der Objekt-Position relativ zum TCP ist somit nicht möglich. Kleine Rx- oder Ry-Kippungen des XY-Tisches, d.h. Kippungen um die X- oder Y-Achse, durch unvermeidbare Führungsabweichungen verursachen entsprechende Positionsfehler des Objekts.

Ähnliches gilt auch für die aus der EP 2 068 112 A1 bekannten Vorrichtungen. Hier wird ein transparenter XY-Schlitten beschrieben, auf dessen Oberseite ein Kreuzgitter als Maßverkörperung aufgebracht ist, das von unten durch das transparente Schlitten-Substrat hindurch von drei ortsfesten Abtastköpfen optisch abgetastet wird. Die Kreuzgitter-Maßverkörperung ist deshalb als sogenanntes Rückflächengitter ausgebildet. Auf der Oberseite des transparenten XY-Schlittens liegt das zu positionierende Objekt in Form eines Wafers. Auch bei den in der EP 2 068 112 A1 vorgeschlagenen Vorrichtungen fällt der effektive Messpunkt der Abtastköpfe in Z-Richtung somit nicht wie gewünscht mit dem TCP zusammen. Eine genaue Betrachtung der vorgeschlagenen Abtastung zeigt, dass bei einer Dicke des transparenten Schlitten-Substrats im Bereich von 30mm - 100mm Abbe-Abstände in Z-Richtung in der Größenordnung von 10mm - 33mm resultieren. Mit typischen Führungsabweichungen von etwa 25$\mu$rad bzgl. der Rx- und Ry-Kippungen ergeben sich Messfehler bei der Positionsbestimmung von 250nm - 825nm, was bei den typischerweise hohen Positionierungsanforderungen in derartigen Anwendungen nicht akzeptabel ist.

Weitere optische Positionsmesseinrichtungen mit abgetasteten Reflexions-Maßverkörperungen sind aus der EP 1 901 041 A1 bekannt. Im ersten und zweiten erläuterten Ausführungsbeispiel dieser Druckschrift kann dabei durch die geeignete Wahl von Systemparametern vorgesehen werden, dass der neutrale Drehpunkt jeweils unterhalb der Ebene mit der Reflexions-Maßverkörperung zu liegen kommt und dadurch eventuelle Abbe-Fehler kompensierbar sind.

Weitere optische Positionsmesseinrichtungen, in denen die Lage des neutralen Drehpunkts in bestimmten Bereichen zwischen zwei Maßstäben festgelegt wird, sind ferner aus der DE 10 2007 023 300 A1 bekannt.

## ZUSAMMENFASSUNG DER ERFINDUNG

Der vorliegenden Erfindung liegt die Aufgabe zugrunde, eine optische Positionsmesseinrichtung anzugeben, bei der die Lage des effektiven Messpunkts möglichst flexibel einstellbar ist und insbesondere im Hinblick auf die einzuhaltende Abbe-Bedingung einen möglichst geringen Abbe-Abstand zwischen dem effektiven Messpunkt der Positionsmesseinrichtung und einem Tool Center Point eines Werkzeugs in der entsprechenden Maschine gewährleistet.

Diese Aufgabe wird erfindungsgemäß durch eine optische Positionsmesseinrichtung mit den Merkmalen des Anspruchs 1 gelöst.

Vorteilhafte Ausführungen der erfindungsgemäßen optischen Positionsmesseinrichtung ergeben sich aus den Maßnahmen, die in den abhängigen Ansprüchen aufgeführt sind.

Die erfindungsgemäße Positionsmesseinrichtung zur Erfassung der Relativposition einer Maßverkörperung und mindestens eines Abtastkopfes, die entlang mindestens einer Messrichtung zueinander relativ beweglich sind, weist eine optische Abtastung auf, die derart ausgebildet ist, dass der effektive Messpunkt der Abtastung in einem definierten Abstand in derjenigen Richtung beabstandet von der Maßverkörperung liegt, die abgewandt zum Abtastkopf orientiert ist.

Hierbei ist es möglich, dass zur optischen Abtastung der Maßverkörperung ein Strahlenbündel eine Aufspaltung in zwei Teilstrahlenbündel erfährt, jedes der beiden Teilstrahlenbündel mindestens einmal ein Reflexionsgitter der Maßverkörperung beaufschlagt und darüber eine Beugung derart erfährt, dass eine Winkelhalbierende zwischen dem auf das Reflexionsgitter einfallenden und dem darüber zurückreflektierten Teilstrahlenbündel eine optische Achse in einem Punkt schneidet, der auf der zum Abtastkopf abgewandten Seite der Maßverkörperung liegt und welcher den effektiven Messpunkt der Abtastung darstellt.

Es kann vorgesehen sein, dass

- mindestens vor einem Beaufschlagen des Reflexionsgitters eine Aufspaltung des Strahlenbündels in die zwei Teilstrahlenbündel erfolgt und
- bei einer erfolgenden Beugung am Reflexionsgitter jeweils eine Umlenkung der Teilstrahlenbündel von der optischen Achse weg erfolgt und
- über mindestens ein Ablenkelement eine Umlenkung zurück zur optischen Achse erfolgt, wo die Teilstrahlenbündel zur Wiedervereinigung kommen.

Dabei können die aufgespaltenen Teilstrahlenbündel zwischen Aufspaltung und Wiedervereinigung symmetrisch in Bezug auf die optische Achse verlaufen.

Ferner ist es möglich, dass die Maßverkörperung als Rückflächengitter ausgebildet ist und ein plattenförmiges, transparentes Substrat sowie ein Reflexionsgitter umfasst, dessen reflektierende Seite in Richtung des Substrats und in Richtung des Abtastkopfes orientiert ist.

Desweiteren ist es möglich, dass die Maßverkörperung als Vorderflächengitter ausgebildet ist und ein Reflexionsgitter umfasst, dessen reflektierende Seite in Richtung des Abtastkopfes orientiert ist.

Es kann vorgesehen sein, dass

- die Maßverkörperung gegenüber einem ersten Abtastkopf entlang einer ersten Messrichtung relativ beweglich angeordnet ist und
- die Maßverkörperung gegenüber einem zweiten Abtastkopf entlang einer zweiten Messrichtung beweglich angeordnet ist, wobei die zweite Messrichtung orthogonal zur ersten Messrichtung orientiert ist.

Dabei kann die Maßverkörperung ferner gegenüber einem dritten Abtastkopf entlang der ersten oder zweiten Messrichtung beweglich angeordnet sein.

Desweiteren ist es möglich, dass die Maßverkörperung als Kreuzgitter ausgebildet ist.

In einer möglichen Ausführungsform umfasst der Abtastkopf eine Lichtquelle, mehrere Detektorelemente sowie eine Abtastplatte, die auf einer Seite ein Aufspaltgitter sowie ein Vereinigungsgitter und auf der entgegengesetzten Seite mehrere weitere Gitter aufweist, so dass

- ein von der Lichtquelle emittiertes Strahlenbündel über das Aufspaltgitter eine Aufspaltung in zwei Teilstrahlenbündel erfährt,
- die Teilstrahlenbündel dann jeweils in Richtung eines Gitters auf der gegenüberliegenden Seite der Abtastplatte propagieren und darüber jeweils eine Ablenkung in Richtung der optischen Achse erfahren,
- dann in Richtung der Maßverkörperung weiterpropagieren, wo eine Beugung und Rückreflexion in Richtung des Abtastkopfes resultiert,
- die Teilstrahlenbündel jeweils über weitere Gitter eine Ablenkung in Richtung der optischen Achse erfahren und in Richtung des Vereinigungsgitters auf der gegenüberliegenden Seite der Abtastplatte propagieren, wo sie zur interferierenden Überlagerung gelangen und
- überlagerte Teilstrahlenbündel vom Vereinigungsgitter in Richtung der Detektorelemente propagieren, über die phasenverschobene Abtastsignale erfassbar sind.

Als besonders vorteilhaft erweist sich bei der erfindungsgemäßen Positionsmesseinrichtung, dass sich darüber nunmehr die Abbe-Abstände z.B. bei der Anwendung in Verbindung mit XY-Tischen nahezu auf Null reduzieren lassen. Es resultiert daraus eine sehr hohe Genauigkeit bei der Positionsbestimmung bezüglich des Objekts, das mittels des XY-Tisches positioniert wird.

Die erfindungsgemäße Positionsmesseinrichtung kann hierbei flexibel mit unterschiedlichen Maßverkörperungen ausgebildet werden. So ist es möglich, die entsprechende Abtastoptik der Positionsmesseinrichtung auf Maßverkörperungen auszulegen, die als Rückflächengitter oder als Vorderflächengitter ausgebildet sind. Damit ist in beiden Fällen gewährleistet, dass die effektive Messebene der entsprechenden Positionsmesseinrichtung jenseits der Rückseite der Maßverkörperung liegt. Dadurch ist es möglich, dass in der effektiven Messebene das zu positionierende Objekt, beispielsweise ein Wafer, platziert werden kann. Es lassen sich somit besonders vorteilhaft bei XY-Tischen alle Abbe-Abstände nahezu auf Null reduzieren und damit die Abbe-Bedingung einhalten. Die daraus resultierende hohe Messgenauigkeit bei der Positionsbestimmung wird kaum mehr von Führungsabweichungen des XY-Tisches beeinträchtigt.

Da die Führungsabweichungen die Positionsbestimmung kaum mehr beeinflussen, können einfachere Führungen mit entsprechend größeren Toleranzen eingesetzt werden. Da bisher die hochgenauen Führungen einen erheblichen Teil der Herstellkosten eines XY-Tisches verursachen, können auf diese Weise deutlich Kosten reduziert werden.

Weitere Einzelheiten und Vorteile der vorliegenden Erfindung seien anhand der nachfolgenden Beschreibung von Ausführungsbeispielen der erfin-dungsgemäßen Vorrichtung in Verbindung mit den Figuren erläutert.

## KURZE BESCHREIBUNG DER ZEICHNUNGEN

Es zeigt

Figur 1 und 2      jeweils eine Strahlengangdarstellung zur Erläuterung theoretischer Überlegungen im Zusammenhang mit der erfindungsgemäßen optischen Positionsmesseinrichtung;

Figur 3a - 3c      jeweils eine Schnittansicht einer ersten optischen Positionsmesseinrichtung;

Figur 4      eine Schnittansicht einer zweiten optischen Positionsmesseinrichtung;

Figur 5a - 5c      jeweils eine Schnittansicht eines ersten Ausführungsbeispiels der erfindungsgemäßen optischen Positionsmesseinrichtung;

Figur 6a - 6c      jeweils eine Schnittansicht eines zweiten Ausführungsbeispiels der erfindungsgemäßen optischen Positionsmesseinrichtung.

## BESCHREIBUNG DER AUSFÜHRUNGSFORMEN

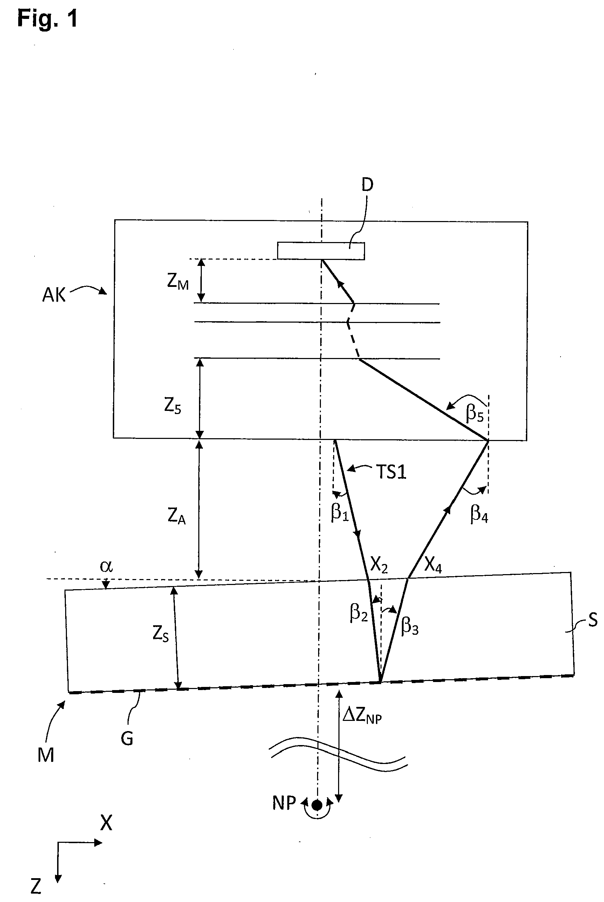

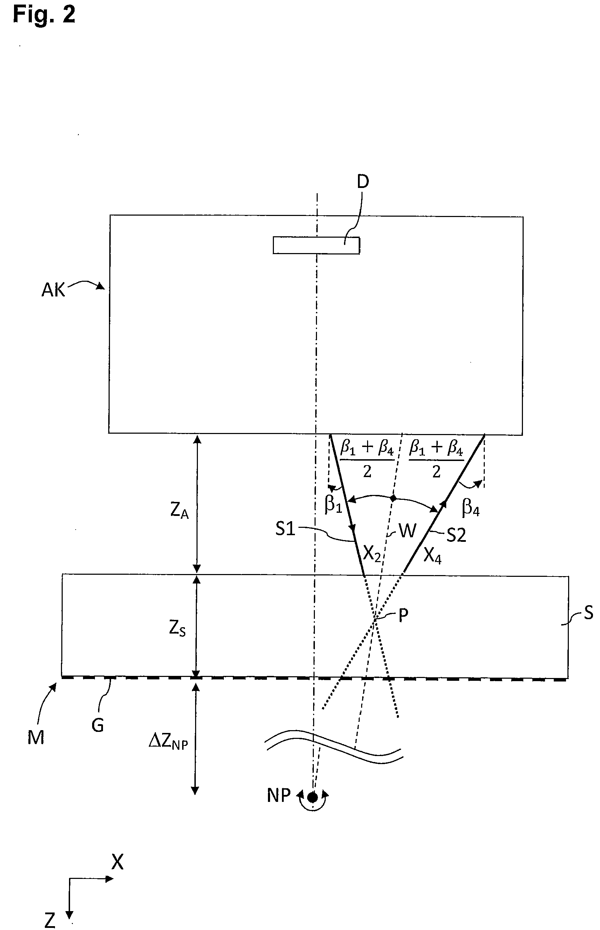

Bevor im Anschluss einzelne Ausführungsbeispiele der erfindungsgemäßen optischen Positionsmesseinrichtung im Detail beschrieben werden, seien zunächst grundlegende theoretische Überlegungen hierzu mit Hilfe der Figuren 1 und 2 erläutert. Diese zeigen einen Teil des Abtaststrahlengangs in einem Ausführungsbeispiel der erfindungsgemäßen optischen Positionsmesseinrichtung.

In einer hochauflösenden optischen Positionsmesseinrichtung basierend auf einem interferentiellen Abtastprinzp, wird üblicherweise ein von einer Lichtquelle geliefertes Lichtbündel kollimiert und in zwei Teilstrahlenbündel aufgespalten. Die Teilstrahlenbündel werden an einer Maßverkörperung in unterschiedliche Beugungsordnungen abgelenkt und schließlich durch Überlagerung zur Interferenz gebracht und daraus positionsabhängige, phasenverschobene Abtastsignale abgeleitet.

In Figur 1 ist der Strahlengang einer beispielhaften optischen Positionsmesseinrichtung teilweise dargestellt, welche eine Maßverkörperung M aufweist, die als Rückflächengitter ausgebildet ist. Das Rückflächengitter umfasst ein plattenförmiges, transparentes Substrat S und ein Reflexionsgitter G, dessen reflektierende Seite in Richtung des Substrats S bzw. in Richtung des gegenüber der Maßverkörperung M mindestens entlang der Messrichtung X beweglichen Abtastkopfes AK orientiert ist. Anhand dieser Darstellung soll zunächst die Lage des effektiven Messpunkts NP dieser Positionsmesseinrichtung erklärt werden.

Es wird dabei angenommen, dass der Strahlengang der beiden aufgespaltenen Teilstrahlenbündel symmetrisch zur optischen Achse Z verläuft, so dass es nachfolgend ausreicht, nur dasjenige Teilstrahlenbündel zu betrachten, das an der Maßverkörperung M in die +1. Beugungsordnung abgelenkt wird und in Figur 1 mit TS1 bezeichnet ist. Die Maßverkörperung M ist dabei um den Winkel $\alpha$ um die Y-Achse gekippt. Das betrachtete Teilstrahlenbündel TS1 tritt aus dem Abtastkopf AK unter einem Winkel $\beta_1$ zur optischen Achse Z aus, gelangt auf die transparente Oberseite der als Rückflächengitter ausgebildeten Maßverkörperung M, wo es durch Brechung an der Grenzfläche Luft-Substrat S in einem Winkel $\beta_2$ zur optischen Achse Z abgelenkt wird und durch das Substrat S weiter zum rückseitigen Reflexionsgitter G der Maßverkörperung M propagiert. Dort wird es in erster Beugungsordnung in einen Winkel $\beta_3$ zur optischen Achse Z reflektierend gebeugt und an der Maßverkörperungsoberseite erneut durch Brechung an der Grenzfläche Substrat S - Luft in einen Winkel $\beta_4$ zur optischen Achse Z abgelenkt. Das Teilstrahlenbündel TS1 propagiert anschließend zum Abtastkopf AK, wo es durch weitere - nicht im einzelnen dargestellteoptische Bauelemente wie etwa ablenkende Gitter und Vereinigungsgitter in den Abständen $Z_1$ $Z_2$, ... $Z_{M^-1}$ entlang der optischen Achse Z abgelenkt und schließlich auf der optischen Achse Z am Ort $Z = Z_M$ mit dem symmetrisch zum ersten Teilstrahlenbündel TS1 bezüglich der optischen Achse Z propagierenden zweiten Teilstrahlenbündel überlagert wird, das in Figur 1 nicht gezeigt ist. Über eine nachgeordnete Detektoranordnung D erfolgt die Erfassung der verschiebungsabhängigen Abtastsignale.

Die im Strahlverlauf resultierende Phasenverschiebung des betrachteten Teilstrahlenbündels TS1 lässt sich am einfachsten an Orten entlang der optischen Achse Z berechnen. Sie ergibt sich als Summe von einzelnen Phasenverschiebungs-Beiträgen der Form $k_z.\Delta z$, wobei $k_z$ die Z-Komponente des k-Vektors eines Teilsegments des Strahlengangs bezeichnet und $\Delta z$ die zugehörige Z-Ausdehnung des Teilsegments am Ort der optischen Achse Z. Damit ergibt sich für die resultierende Phasenverschiebung $\phi$ des Teilstrahlenbündels TS1:

$$\phi = \phi_1 + k_0 \cdot Z_A \cdot \cos(\beta_1) + k_0 \cdot n_S \cdot Z_S \cdot \cos(\beta_2) + k_0 \cdot n_S \cdot Z_S \cdot \cos(\beta_3) + k_0 \cdot Z_A \cdot \cos(\beta_4) + k_0 \cdot \sum_{m=5}^{M} n_m \cdot Z_m \cdot \cos(\beta_m) \qquad \text{(Gl. 1)}$$

mit:

$\phi$ := Resultierende Phasenverschiebung des Teilstrahlenbündels TS1 zwischen Aufspaltung und Überlagerung mit dem anderen Teilstrahlenbündel
$\phi_1$ := Phasenverschiebung des Teilstrahlenbündels TS1 beim Austritt aus dem Abtastkopf
$k_0$ := $2\,\pi\,/\,\lambda$
$\lambda$ := Wellenlänge der Lichtquelle
$Z_A$ := Abtastabstand zwischen Abtastkopf AK und Oberseite der Maßverkörperung M
$Z_s$ := Dicke des Substrats S der Maßverkörperung M
$n_s$ := Brechungsindex des Substrats S der Maßverkörperung M
$\beta_1$, $\beta_2$,.. $\beta_M$ := Winkel der Teilsegmente des Teilstrahlenbündels TS1 zur optischen Achse Z
$n_5$, $n_6$,... $n_M$ := Brechungsindizes der optischen Bauelemente im Abtastkopf AK, die vom Teilstrahlenbündel TS1

durchlaufen werden

$Z_5, Z_6,... Z_M$ := zugehörige Abstände der Bauelemente im Abtastkopf AK

Durch die Kippung der Maßverkörperung M um den kleinen Winkel $\alpha$ verändern sich die Winkel $\beta_2, \beta_3,... \beta_M$ der Teilsegmente des Teilstrahlenbündels TS1. Es gelten hierbei folgende bekannte Beziehungen:

$$n_S \cdot \sin(\beta_2 - \alpha) = \sin(\beta_1 - \alpha) \qquad (Gl. 2.1)$$

$$n_S \cdot \sin(\beta_3 + \alpha) = n_S \cdot \sin(\beta_2 - \alpha) + \frac{\lambda}{d_S} \qquad (Gl.2.2)$$

$$\sin(\beta_4 + \alpha) = n_S \cdot \sin(\beta_3 + \alpha) \qquad (Gl.2.3)$$

$$n_{m+1} \cdot \sin(\beta_{m+1}) = n_m \cdot \sin(\beta_m) \qquad (Gl.2.4)$$

mit:

$d_S$ := Gitterperiode der Maßverkörperung M

Bei kleinen Kippwinkeln $\alpha$ der Maßverkörperung M wird die Phase des Teilstrahlenbündels TS1 in linearer Näherung um $\frac{\partial \phi}{\partial \alpha} \cdot \alpha$ verschoben. Diese Phasenverschiebung muss bei einer Kippung um den effektiven Messpunkt NP der Positionsmesseinrichtung durch eine gegenläufige Phasenverschiebung $\Phi_x$ kompensiert werden, die aus einer X-Verschiebung der Maßverkörperung M resultiert. Liegt der effektive Messpunkt NP gemäß Figur 1 im Abstand $\Delta Z_{NP}$ unterhalb der Maßverkörperung M, so wird bei einer kleinen Kippung $\alpha$ um diesen effektiven Messpunkt NP die Maßverkörperung M in X-Richtung um $\Delta Z_{NP}.\alpha$ verschoben. Die zugehörige Phasenverschiebung $\phi_x$ des Teilstrahlenbündels TS1 ist daher:

$$\phi_X = \frac{2\pi}{d_S} \cdot \Delta Z_{NP} \cdot \alpha \qquad (Gl. 3)$$

Die Kompensation der Phasenverschiebung $\frac{\partial \phi}{\partial \alpha} \cdot \alpha$ mit der Phasenverschiebung $\Phi_x$ ergibt folgende Bedingung:

$$0 = \frac{\partial \phi}{\partial \alpha} \cdot \alpha + \frac{2\pi}{d_S} \cdot \Delta Z_{NP} \cdot \alpha \qquad (Gl. 4)$$

Daraus kann der Abstand $\Delta Z_{NP}$ des effektiven Messpunkts NP der Positionsmesseiririchtung von der Maßverkörperung M entlang der Z-Richtung berechnet werden. Mit den Gleichungen 1, 2.1 - 2.4 und 4 ergibt sich:

$$\Delta Z_{NP} = -Z_S + \frac{X_2 \cdot \cos(\beta_1) + X_4 \cdot \cos(\beta_4)}{\sin(\beta_4) - \sin(\beta_1)} \qquad (Gl. 5)$$

Gleichung 5 beschreibt somit den Zusammenhang zwischen dem Abstand des effektiven Messpunkts NP der erfindungsgemäßen optischen Positionsmesseinrichtung und verschiedenen Systemparametern der verwendeten Abtastoptik. Über die geeignete Wahl der Abtastoptik mit den Systemparametern $Z_s, X_2, X_4, \beta_1$ und $\beta_2$ lässt sich somit der effektive Messpunkt NP an der für die jeweilige Anwendung gewünschten Position platzieren.

Die Lage des effektiven Messpunkts NP nach Gleichung 5 ist äquivalent mit folgender geometrischer Bestimmung der Lage des effektiven Messpunkts NP, was anhand von Figur 2 erläutert sei. In Figur 2 sind dazu nur die Segmente S1, S2 des Teilstrahlenbündels TS1 eingezeichnet, die vom Abtastkopf AK zur Maßverkörperung M und wieder zurück verlaufen. Die Segmente S1, S2 sind entsprechend verlängert und schneiden sich im Punkt P im Substrat S der Maßverkörperung M. Die Winkelhalbierende W der beiden Segmente S1, S2 trifft dann genau im effektiven Messpunkt NP auf die optische Achse Z.

Bei Positionsmesseinrichtungen, deren aufgespaltene Teilstrahlenbündel mehrfach auf die Maßverkörperung M treffen, kann die obige Gleichung 5 analog verwendet werden. Für jedes Auftreffen auf die Maßverkörperung M kann nach Gleichung 5 ein einzelner effektiver Messpunkt bestimmt werden. Ein solcher einzelner effektiver Messpunkt entspricht dem theoretischen Fall, dass die Maßverkörperung an jeder Auftreffstelle der beiden Teilstrahlenbündel unabhängig gekippt werden könnte. Den resultierenden effektiven Messpunkt der Positionsmesseinrichtung erhält man aus einer arithmetischen Mittelwertbildung der einzelnen effektiven Messpunkte, was geometrisch einer Schwerpunktbildung der einzelnen effektiven Messpunkte entspricht.

Mit obiger Gleichung 5 oder mit der anhand von Figur 2 erläuterten, hierzu analogen geometrischen Bestimmung lässt sich der effektive Messpunkt der Vorrichtung aus der eingangs erwähnten EP 2 068 112 A1 für eine Maßverkörperung mit Rückflächengitter leicht ermitteln. Der größte und damit günstigste Wert des Abstand $\Delta Z_{NP}$ des effektiven Messpunkts der Positionsmesseinrichtung von der Maßverkörperung entlang der Z-Richtung liegt bei

$$\Delta Z_{NP} = -Z_S \cdot \frac{n_S - 1}{n_S},$$ was mit $n_S$=1.5 einen Wert $\Delta Z_{NP} = -Z_S/3$ ergibt.

Damit liegt der effektive Messpunkt stets weit innerhalb des Substrats der Maßverkörperung und damit entlang der Z-Richtung inakzeptabel weit entfernt vom TCP, d.h. es resultieren entsprechend große Abbe-Abstände zum TCP und damit erhebliche Messfehler bei der Positionsbestimmung. Dies liegt i.w. daran, dass bei der Auslegung der Abtastoptik nicht berücksichtigt wurde, dass die aufgespaltenen Teilstrahlenbündel im Fall einer Rx- oder einer Ry-Verkippung der Maßverkörperung aufgrund des Durchlaufens des transparenten Substrats unterschiedliche Phasenverschiebungen erfahren.

Für einen effektiven Messpunkt NP der Positionsmesseinrichtung, der auf dem Reflexionsgitter G der Maßverkörperung M oder aber entlang der Z-Richtung noch weiter vom Abtastkopf AK entfernt liegt, muss daher folgende Bedingung eingehalten werden:

$$\Delta Z_{NP} \geq 0 \qquad \text{(Gl. 6)}$$

Mit Gleichung 5 und 2 ergibt sich daraus:

$$X_2 \cdot \cos(\beta_1) + X_4 \cdot \cos(\beta_4) \geq \frac{\lambda}{d_S} Z_S \qquad \text{(Gl. 7)}$$

Wenn die Winkel $\beta_1$ und $\beta_2$ kleiner 25° sind, kann Gleichung 7 folgendermaßen angenähert werden:

$$X_2 + X_4 \geq \frac{\lambda}{d_S} Z_S \qquad \text{(Gl. 8)}$$

Diese Näherung bedeutet, dass der Schwerpunkt $\frac{X_2 + X_4}{2}$ der beiden Auftreffpunkte eines Teilstrahlenbündels auf der Oberseite der Maßverkörperung M von der optischen Achse Z weiter entfernt sein muss als ein Wert $2\frac{\lambda}{d_S} Z_S$.

Bei Maßverkörperungen, die als Vorderflächengitter ausgebildet sind, ist $Z_S$=0, da kein transparentes Substrat vor dem Reflexionsgitter berücksichtigt werden muss. Allerdings muss in diesem Fall die Dicke $Z_B$ des rückseitigen Maßverkörperungssubstrats betrachtet werden. Der effektive Messpunkt muss außerhalb des rückseitigen Maßverkörperungssubstrats liegen, um dort das zu bewegende Objekt einbringen zu können. Wenn $\Delta Z_{NP}$ wiederum den Abstand des effektiven Messpunkts vom Gitter der Maßverkörperung bezeichnet, müssen anstelle der Gleichungen 6 - 8 die folgenden modifizierten Bedingungen gelten:

$$\Delta Z_{NP} \geq Z_B \qquad \text{(Gl. 6')}$$

Im Fall einer als Vorderflächengitter ausgebildeten Maßverkörperung gilt $X_4 = X_2$, so dass mit den Gleichungen 5 und 2 folgt:

$$X_2 \cdot (\cos(\beta_1) + \cos(\beta_4)) \geq \frac{\lambda}{d_S} Z_B \qquad (\text{Gl. 7'})$$

Wenn die Winkel $\beta_1$ und $\beta_2$ wieder kleiner 25° sind, kann Gleichung 7' folgendermaßen angenähert werden:

$$2 \cdot X_2 \geq \frac{\lambda}{d_S} Z_B \qquad (\text{Gl. 8'})$$

Die Gleichungen 6' - 8' ergeben sich aus den Gleichungen 6 - 8 durch die einfachen Substitutionen $Z_S \rightarrow Z_B$, $X4 \rightarrow X_2$.

Über die entsprechende erfindungsgemäße Auslegung der Abtastoptik einer Positionsmesseinrichtung lässt sich nunmehr die Lage des effektiven Messpunkts derselbigen entlang der Z-Richtung definiert einstellen und insbesondere auf die Lage des TCP in der jeweiligen Anwendung abstimmen. Ein Merkmal einer entsprechend ausgelegten Abtastoptik einer erfindungsgemäßen Positionsmesseinrichtung ist, dass die beiden Teilstrahlenbündel bereits aufgespalten werden, bevor sie auf die Maßverkörperung treffen und dass sie bei der Beugung an einer als Rückflächen- oder Vorderflächengitter ausgebildeten Maßverkörperung jeweils noch weiter weg von der optischen Achse Z abgelenkt werden, anstatt wie in derartigen Systemen üblich hin zur optischen Achse Z abgelenkt zu werden. Neben einem Aufspalt- und einem Vereinigungsgitter ist als weiteres optisches Bauelement mindestens ein zusätzliches Ablenkelement notwendig, das im Strahlengang vor oder nach der Maßverkörperung eingebracht wird. Es lenkt die Teilstrahlenbündel zurück zur optischen Achse, und gleicht damit die Ablenkung durch die Maßverkörperung weg von der optischen Achse zumindest teilweise wieder aus. Die Kombination aus Aufspaltgitter, Ablenkelementen und Maßverkörperung ist so dimensioniert, dass die Teilstrahlenbündel am Ort des Vereinigungsgitters wieder auf die optische Achse gelangen, wo sie interferieren können. Werden die beiden Teilstrahlenbündel mehrfach an der Maßverkörperung reflektiert, so muss zumindest für eine der Reflexionen das obige Merkmal erfüllt sein.

Ersteoptische Positionsmesseinrichtung

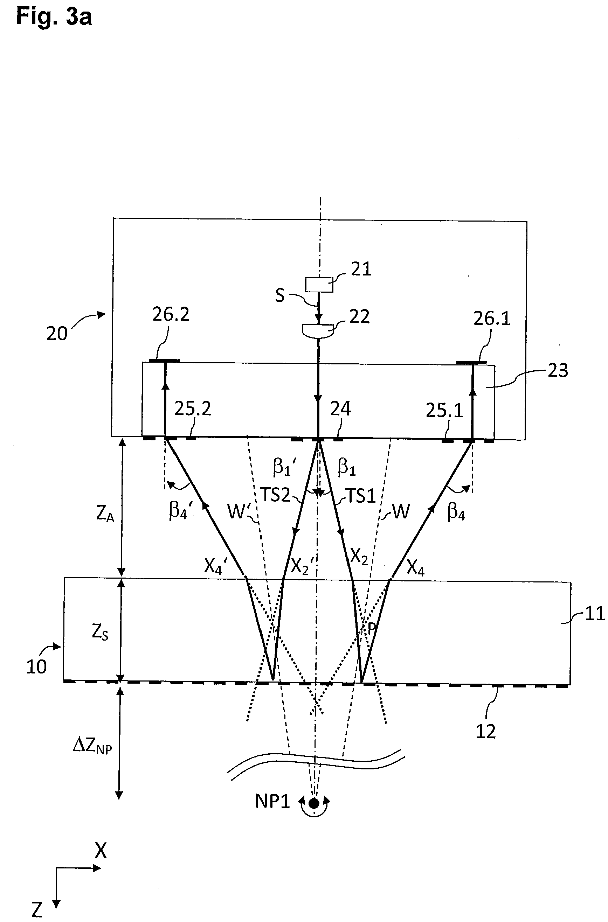

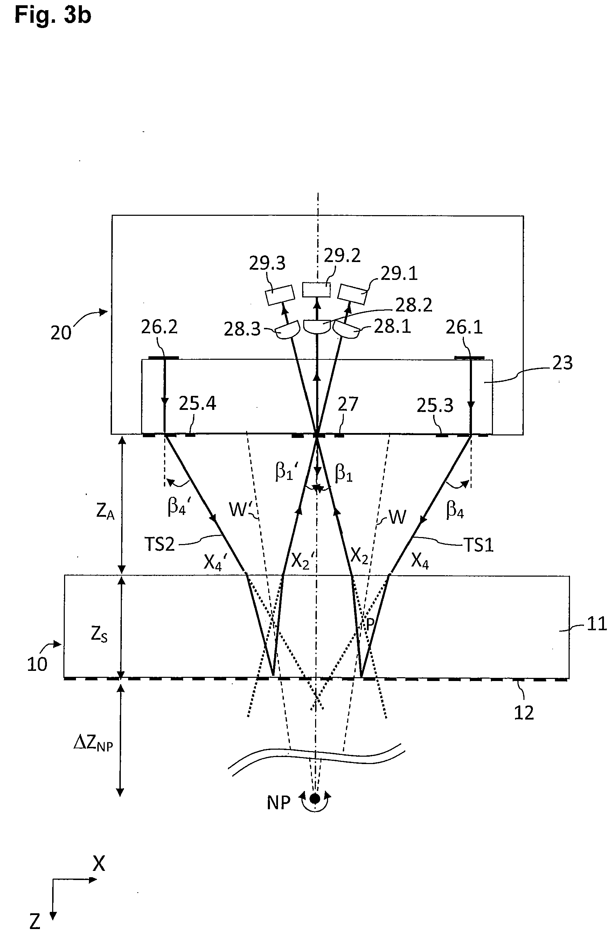

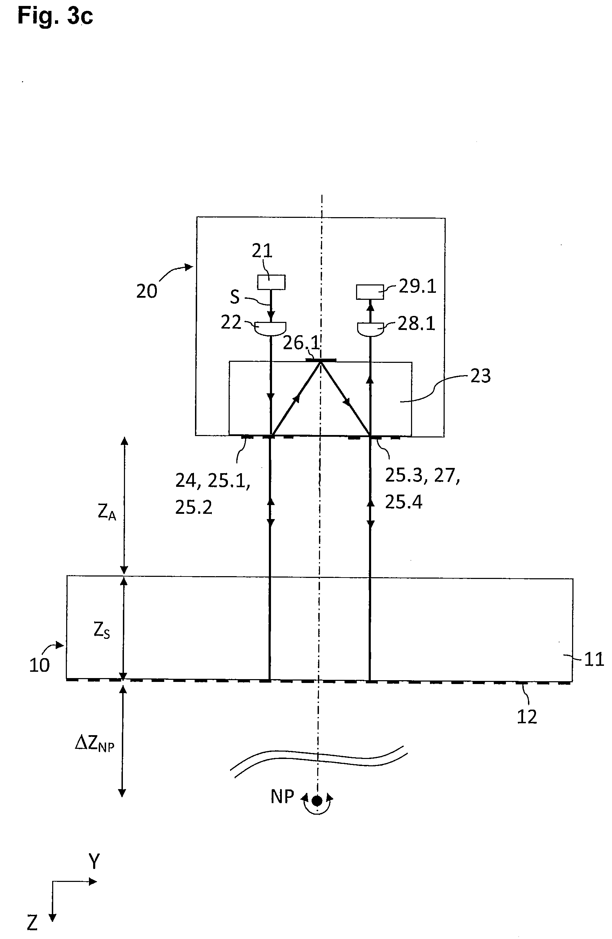

In den Figuren 3a - 3c ist eine erste Positionsmesseinrichtung in verschiedenen Schnittansichten dargestellt. Dabei zeigt Figur 3a in einer XZ-Ansicht den Abtast-Strahlverlauf von der Lichtquelle 21 bis zu den Reflektoren 26.1, 26.2 und Figur 3b entsprechend den Abtast-Strahlenverlauf von den Reflektoren 26.1, 26.2 bis zu den Detektorelementen 29.1 - 29.3. In Figur 3c ist der gesamte Abtast-Strahlverlauf in einer YZ-Ansicht dargestellt.

Die Positionsmesseinrichtung umfasst eine Maßverkörperung 10 sowie mindestens einen Abtastkopf 20: Maßverkörperung 10 und Abtastkopf 20 sind relativ zueinander mindestens entlang der X-Achse, d.h. mindestens entlang einer Messrichtung, beweglich angeordnet und z.B. mit beweglichen Komponenten einer Maschine verbunden, die relativ zueinander positioniert werden müssen.

Hierbei kann es sich etwa um den XY-Tisch einer Halbleiter-Fertigungseinrichtung handeln, der entlang der senkrecht zueinander orientierten X- und Y-Richtungen, d.h. entlang zweier Messrichtungen, beweglich angeordnet ist und an dem die Maßverkörperung 10 angebracht ist, hier ausgebildet als zweidimensionales Kreuzgitter. An einer demgegenüber stationären Komponente der Halbleiter-Fertigungseinrichtung sind in diesem Fall dann mindestens zwei Abtastköpfe angeordnet, über die die Maßverkörperung optisch abgetastet wird und Positionssignale für eine nachgeordnete Maschinensteuerung erzeugt werden.

Im Beispiel der Figuren 3a - 3c ist aus Gründen der besseren Darstellbarkeit der Fall gezeigt, bei dem lediglich die Relativbewegung von Abtastkopf 20 und Maßverkörperung 10 entlang einer einzigen Messrichtung X erfasst wird und hierzu eine eindimensionale Maßverkörperung 10 sowie ein einziger Abtastkopf 20 vorgesehen ist.

Die Maßverkörperung 10 ist im dargestellten Ausführungsbeispiel als Rückflächengitter ausgebildet und umfasst ein plattenförmiges transparentes Substrat 11 sowie ein Reflexionsgitter 12. Das Reflexionsgitter 12 ist hierbei mit seiner reflektierenden Seite in Richtung des Substrats 11 orientiert und wird aus Richtung des Substrats 11 abgetastet, d.h. vom Abtastkopf 20 her fällt Licht aus Richtung des Substrats 11 auf das Reflexionsgitter 20. Das Reflexionsgitter 20 besteht aus entlang der Messrichtung X periodisch angeordneten Teilungsbereichen unterschiedlicher Stufenhöhen oder Reflektivität.

Im Fall der gewünschten Erfassung von Relativbewegungen entlang mindestens zweier Messrichtungen wäre die Maßverkörperung in bekannter Art und Weise als zweidimensionales Kreuzgitter auszubilden und mindestens zwei Abtastköpfe vorzusehen, wobei die Mehrzahl von Abtastköpfen grundsätzlich identisch ausgebildet aber unterschiedlich orientiert angeordnet ist.

Im Abtastkopf 20 des gezeigten ersten Ausführungsbeispiels der erfindungsgemäßen optischen Positionsmesseinrichtung sind eine Lichtquelle 21, eine Kollimatoroptik 22, eine Abtastplatte 23 mit verschiedenen Gittern 24, 25.1 - 25.4, 27 und Reflektoren 26.1, 26.2, Optiken 28.1 - 28.3 sowie Detektorelemente 29.1 - 29.3 angeordnet.

Im Folgenden sei der Abtaststrahlengang in der ersten optischen Positionsmesseinrichtung erläutert.

Das Strahlbündel S der Lichtquelle 21 wird durch die Kollimatoroptik 22 kollimiert und gelangt auf ein Aufspaltgitter 24. Dort wird es in zwei Teilstrahlenbündel TS1, TS2 aufgeteilt, deren weiterer Strahlenverlauf symmetrisch zur YZ-Ebene ist. Das in +X-Richtung abgelenkte Teilstrahlenbündel TS1 gelangt auf die transparente Oberseite der Maßverkörperung 10, wird dort gebrochen und propagiert durch das Substrat 11 zum rückseitig angeordneten Reflexionsgitter 12 der Maßverkörperung 10. Hier wird es ebenfalls in +X-Richtung in +1. Beugungsordnung reflektierend gebeugt und trifft dann wieder auf die transparente Oberseite des Maßverkörperung 10, wo es erneut gebrochen wird. Das Teilstrahlenbündel TS1 propagiert dann zu einem Gitter 25.1 im Abtastkopf 20, das in diesem Ausführungsbeispiel als Ablenkelement wie oben erwähnt fungiert. Das Gitter 25.1 enthält als überlagerte diffraktive Struktur mehrere optische Funktionen. Zum einen lenkt es das Teilstrahlenbündel TS1 in X-Richtung parallel zur optischen Achse Z, während es in Y-Richtung das Teilstrahlenbündel TS1 auf einen Reflektor 26.1 ablenkt und fokussiert. Nach der Reflexion am Reflektor 26.1 gelangt es auf das als weiteres Ablenkelement fungierende Gitter 25.3, das es in Y-Richtung wieder kollimiert, parallel zur optischen Achse Z ausrichtet und in X-Richtung ablenkt. Das Teilstrahlenbündel TS1 propagiert dann ein zweites Mal zur Maßverkörperung 10, wo es auf der Oberseite gebrochen und am Reflexionsgitter 12 erneut in +1. Beugungsordnung gebeugt wird. Nach einer vierten Brechung an der Oberseite der Maßverkörperung 10 gelangt es auf das Vereinigungsgitter 27, wo das ab der Aufspaltung symmetrisch zur YZ-Ebene propagierende zweite Teilstrahlenbündel TS2 auftrifft. Ein Vereinigungsgitter 27 bringt beide Teilstrahlenbündel zur Interferenz und es treten drei, in resultierender -1., 0. und +1. Beugungsordnung überlagerte Teilstrahlenbündel aus, die über geeignete Optiken 28.1 - 28.3 auf die Detektorelemente 29.1 - 29.3 abgebildet werden, die entsprechende Abtastsignale erzeugen. Durch die geeignete Wahl der Stegbreiten und Steghöhen des Vereinigungsgitters 27 lässt sich in bekannter Art und Weise die Phasenverschiebung zwischen den erzeugten Abtastsignalen definiert einstellen. Idealerweise soll diese Phasenverschiebung jeweils 120° betragen. Die weitere Verarbeitung der Abtastsignale ist in den Figuren 3a - 3c nicht dargestellt, sie erfolgt aber in bekannter Art und Weise und es resultieren ausgangsseitig entsprechende Positionswerte.

Die Strahlengänge der beiden Teilstrahlenbündel TS1, TS2 sind gemäß den Darstellungen in den Figuren 3a und 3b in der XZ-Projektion von der Aufspaltung bis zu den Reflektoren 26.1, 26.2 und von diesen bis zur Strahlvereinigung identisch. Beiden Strahlengängen können jeweils effektive Messpunkte NP1 bzw. NP2 zugeordnet werden. Da sie identische Z-Positionen aufweisen, hat auch der verkettete Strahlengang einen resultierenden effektiven Messpunkt NP im selben Z-Abstand. In der Y-Richtung jedoch liegt der resultierende effektive Messpunkt NP im Schwerpunkt zwischen den beiden Y-Strahlorten der ersten und zweiten Reflexion am Reflexionsgitter 12.

Durch die oben beschriebene, erfindungsgemäße Auslegung der Abtastoptik gemäß Gleichung 7 befindet sich der resultierende effektive Messpunkt NP des dargestellten Ausführungsbeispiels in relativ großem Abstand $\Delta Z_{NP}$ von der Maßverkörperung 10 auf der dem Abtastkopf 20 abgewandten Seite. Der effektive Messpunkt NP liegt hierbei im Schnittpunkt der beiden Winkelhalbierenden W und W' aus den Strahlengängen der Teilstrahlenbündel TS1, TS2 auf der optischen Achse Z. Durch den großen Abstand $\Delta Z_{NP}$ ist es möglich, in diesem Abstand z.B. eine zu bearbeitende Wafer-Oberseite oder ein anderes zu bearbeitendes bzw. zu vermessendes Objekt zu platzieren und besonders genau zu positionieren. Im Fall mehrerer zu erfassender Messrichtungen erweist sich hierbei als vorteilhaft, das Reflexionsgitter der als Rückflächengitter ausgebildeten Maßverkörperung 10 als Kreuzgitter auszubilden. Mit mindestens drei Abtastköpfen, wobei jeder Messrichtung mindestens ein Abtastkopf zugeordnet wird, kann dann jeder Punkt auf der jeweiligen Objektseite mit Abbe-Abständen von nahezu Null gemessen werden.

Zweiteoptische Positionsmesseinrichtung

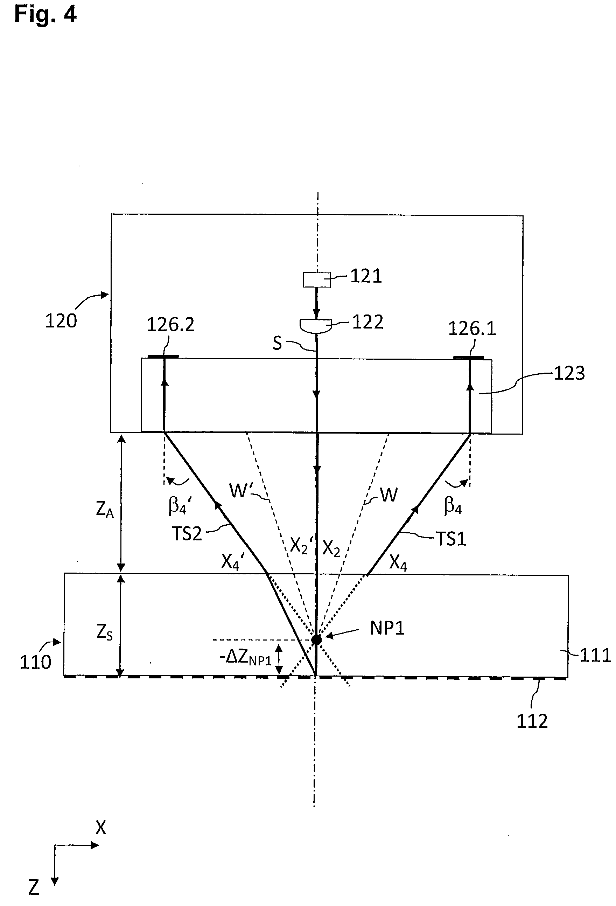

Eine zweite optische Positionsmesseinrichtung ist in einer Schnittansicht in Figur 4 gezeigt; nachfolgend seien lediglich die maßgeblichen Unterschiede zur vorhergehend beschriebenen ersten optischen Positionsmesseinrichtung erläutert.

Da die beiden Teilstrahlenbündel in der ersten optischen Positionsmesseinrichtung im Strahlengangverlauf mehrere Gitter durchlaufen müssen, kann eine Reduzierung der Intensität der Teilstrahlenbündel und damit einhergehend eine verringerte Signalstärke resultieren. Deshalb ist es vorteilhaft, die Zahl der durchlaufenen Gitter zu verringern. Eine Möglichkeit hierzu zeigt die zweite optischen Positionsmesseinrichtung. Von dieser ist in Figur 4 nur der Strahlengang von der Lichtquelle 121 zu den Reflektoren 126.1, 126.2 gezeigt. Der weitere Strahlengang ist identisch zu demjenigen aus Figur 3b der ersten optischen Positionsmesseinrichtung ; ebenso identisch ist für die zweite optischen Positionsmesseinrichtung die Queransicht des Abtast-Strahlengangs gemäß Figur 3c.

In der zweiten optischen Positionsmesseinrichtung entfällt das vorher vorgesehene Aufspaltgitter im Abtastkopf, über welches dort das Lichtbündel in zwei Teilstrahlenbündel aufgespalten wird. Stattdessen erfolgt nunmehr die Aufspaltung des Strahlenbündels S in zwei Teilstrahlenbündel TS1, TS2 über das Reflexionsgitter 112 der wiederum als Rückflächengitter ausgebildeten Maßverkörperung 110. Die aufgespaltenen Teilstrahlenbündel TS1, TS2 beaufschlagen in dieser Variante somit nur jeweils einmal im aufgespaltenen Strahlengang die Maßverkörperung 110. Der weitere Strahlengang ist weitgehend identisch zu demjenigen aus der ersten optischen Positionsmesseinrichtung , weshalb auf eine genaue Beschreibung desselbigen hier verzichtet wird.

Der effektive Messpunkt NP1, der der ersten Reflexion an der Maßverkörperung 110 zugeordnet ist, liegt innerhalb des transparenten Substrats 111 der Maßverkörperung 110. Für den Abstand $\Delta Z_{NP1}$ erhält man nach Gleichung 5 und Gleichung 2:

$$\Delta Z_{NP1} = Z_S \cdot \left( \sqrt{\frac{1-\left(\frac{\lambda}{d_S}\right)^2}{n_S^2-\left(\frac{\lambda}{d_S}\right)^2}} - 1 \right) \approx -Z_S \cdot \frac{n_S-1}{n_S} \quad \text{(Gl. 9)}$$

Der negative Wert des Abstands $\Delta Z_{NP1}$ wird durch einen entsprechend einzustellenden, betragsmäßig größeren Wert des Abstands $\Delta Z_{NP2}$ überkompensiert, so dass sich insgesamt ein positiver Wert $\Delta Z_{NP}$ für den resultierenden effektiven Messpunkt der zweiten optischen Positionsmesseinrichtung ergibt und der resultierende effektive Messpunkt auf derjenigen Seite der Maßverkörperung 110 zu liegen kommt, die abgewandt zum Abtastkopf 120 ist:

$$\Delta Z_{NP} = \frac{1}{2}(\Delta Z_{NP1} + \Delta Z_{NP2}) > 0 \qquad \text{(Gl. 10)}$$

Der effektive Messpunkte NP des gesamten Strahlenganges liegt auch in diesem Beispiel somit wie gewünscht wiederum auf der dem Abtastkopf 120 abgewandten Seite der Maßverkörperung 110. Durch die geringere Zahl von Gittern, die die Teilstrahlenbündel TS1, TS2 insgesamt durchlaufen müssen, ergibt sich in der Praxis eine deutliche Erhöhung der Signalintensität und damit ein deutlich geringeres Positionsrauschen.

Erstes Ausführungsbeispiel

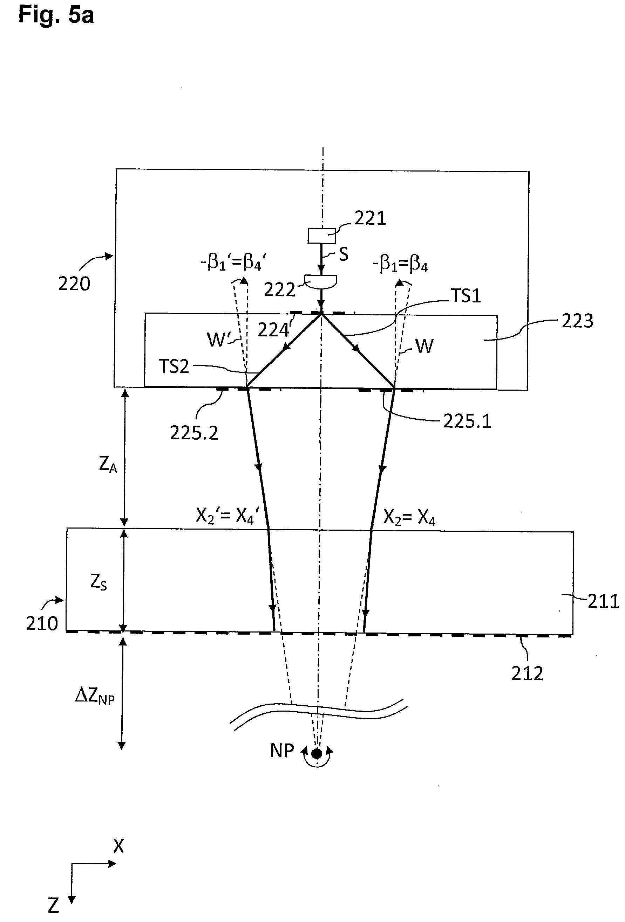

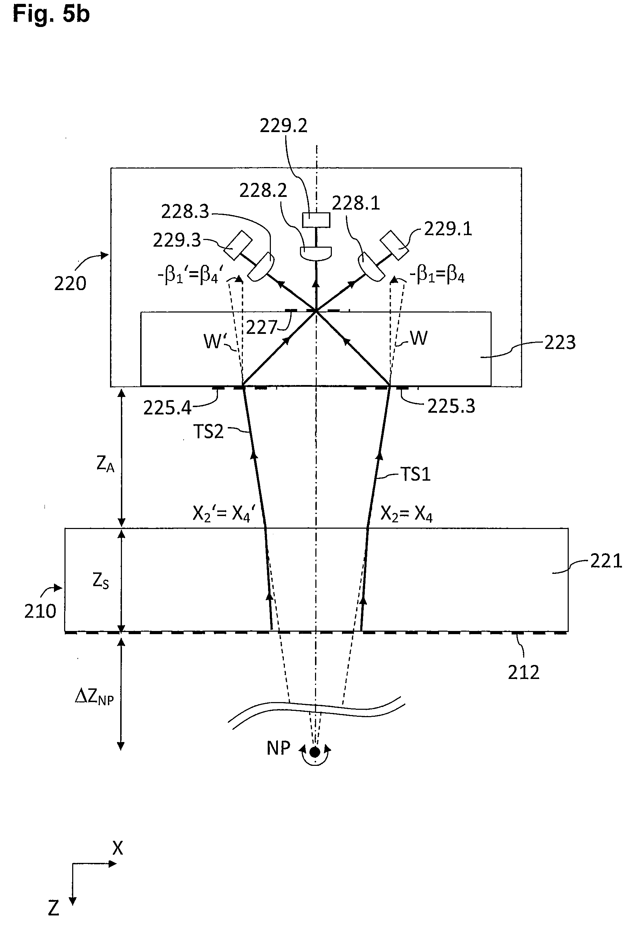

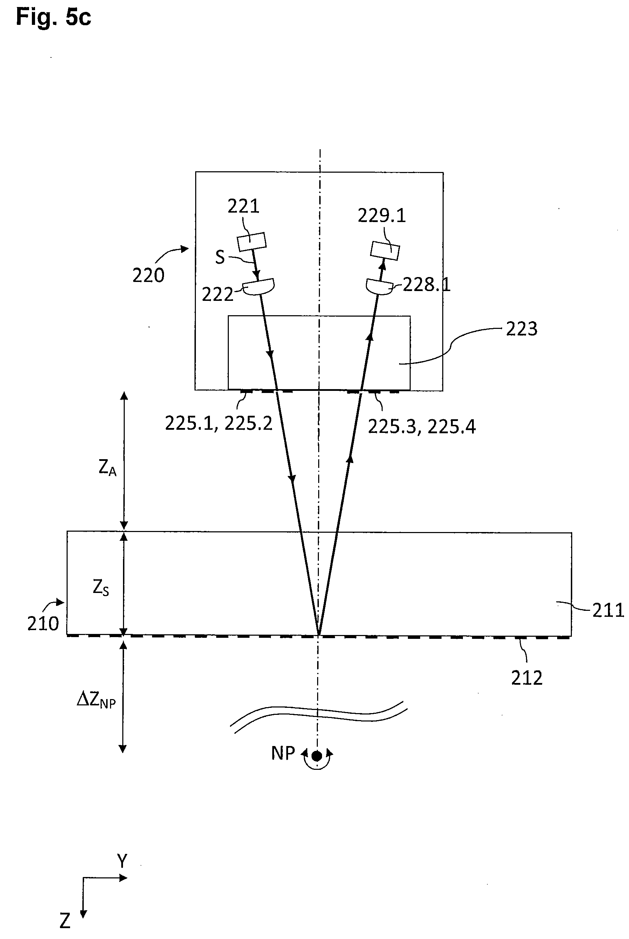

Ein erstes Ausführungsbeispiel der erfindungsgemäßen optischen Positionsmesseinrichtung ist in mehreren Schnittansicht in den Figuren 5a-5c gezeigt; die Strahlengangdarstellungen in den verschiedenen Ansichten entsprechen hierbei denjenigen der ersten optischen Positionsmesseinrichtung , d.h. Figur 5a zeigt den Strahlengang in der XZ-Projektion von der Lichtquelle 221 bis zum Reflexionsgitter 212 der Maßverkörperung 210, Figur 5b zeigt den weiteren Strahlengangverlauf bis zu den Detektorelementen 229.1 - 229.3, Figur 5c stellt die Queransicht des Strahlengangs in der YZ-Projektion dar. Nachfolgend seien i.w. wiederum nur die maßgeblichen Unterschiede zur ersten optischen Positionsmesseinrichtung erläutert.

Im vorliegenden ersten Ausführungsbeispiel erfindungsgemäßen optischen Positionsmesseinrichtung werden die beiden Teilstrahlenbündel TS1, TS2 nur einmal an der Maßverkörperung 210 reflektiert. Ein von der Lichtquelle 221 ausgesandtes Lichtbündel wird durch eine Kollimatoroptik 222 kollimiert und durch ein Aufspaltgitter 224 auf der Oberseite einer Abtastplatte 223 in zwei Teilstrahlenbündel TS1, TS2 aufgespalten. Zwei weitere, als Ablenkelemente fungierende Gitter 225.1, 225.2 auf der Unterseite der Abtastplatte 223 lenken die beiden Teilstrahlenbündel TS1, TS2 jeweils nach innen in Richtung des gewünschten effektiven Messpunkts NP bzw. in Richtung der optischen Achse Z. Die Teilstrahlenbündel TS1, TS2 gelangen auf die transparente Oberseite des Substrats 211 der Maßverkörperung 210 und werden dort gebrochen. Am Reflexionsgitter 212 der Maßverkörperung 210 erfolgt eine Beugung der Teilstrahlenbündel TS1, TS2 in die +1. bzw. -1. Beugungsordnung, so dass die beiden Teilstrahlenbündel TS1, TS2 in der XZ-Projektion entgegengesetzt in Richtung des Abtastkopfes 220 zurücklaufen. Nach einer erneuten Brechung an der transparenten Oberseite des Substrats 211 der Maßverkörperung 210 werden sie durch zwei weitere Gitter 225.3, 225.4, die wiederum als Ablenkelemente dienen, auf der Unterseite der Abtastplatte 223 in Richtung der optischen Achse Z gelenkt, so dass beide Teilstrahlenbündel TS1, TS2 schließlich an der Oberseite der Abtastplatte 223 auf der optischen Achse Z überlagert werden. Durch die Beugung an einem Vereinigungsgitter 227 werden sie zur Interferenz gebracht. Die überlagerten Teilstrahlenbündel TS1, TS2 treten schließlich wie im ersten und zweiten Ausführungsbeispiel in den resultierenden -1., 0. und +1. Beugungsordnungen aus und werden über die Optiken 228.1 - 228.3 auf die jeweils zugehörigen Detektorelemente 229.1-229.3 abgebildet, die die entsprechenden positionsabhängigen, phasenverschobenen Abtastsignale liefern.

In diesem Ausführungsbeispiel gelten folgende Beziehungen:

$$-\beta_1 = \beta_4 \qquad \text{(Gl. 11.1)}$$

$$X_2 = X_4 \qquad \text{(Gl. 11.2)}$$

$$\Delta Z_{NP} = -Z_S + \frac{X_2}{\tan(\beta_4)} \qquad \text{(Gl. 11.3)}$$

Der besondere Vorteil dieses Ausführungsbeispiels der erfindungsgemäßen optischen Positionsmesseinrichtung liegt darin, dass der effektive Messpunkt NP hier stets in einen festen Z-Abstand zum Abtastkopf 220 liegt. Dessen Position hängt insbesondere nicht von der Z-Lage der Maßverkörperung 210 ab. Auch die Dicke $Z_s$ des Substrats 211 der Maßverkörperung 210 hat keinen Einfluss auf die Lage des effektiven Messpunkts NP. Diese Variante der erfindungsgemäßen optischen Positionsmesseinrichtung kann deshalb auch in Verbindung mit einem herkömmlichen Vorderflächengitter bzw. Reflexionsgitter als Maßverkörperung genutzt werden, das beispielsweise auf der Unterseite eines XY-Tisches angebracht ist. Durch den festen Z-Abstand des effektiven Messpunkts zum Abtastkopf 220 kann je nach Anwendungsfall der effektive Messpunkt NP durch eine geeignete Z-Verschiebung des Abtastkopfs 220 definiert in seiner Lage eingestellt werden. Die Lage des effektiven Messpunkts kann auf diese Art und Weise dann beispielsweise an die Dicke des XY-Tisches und des damit zu positionierenden Objekts, z.B. einem Wafer, angepasst werden, ohne die Abtastoptik verändern zu müssen.

Zweites Ausführungsbeispiel

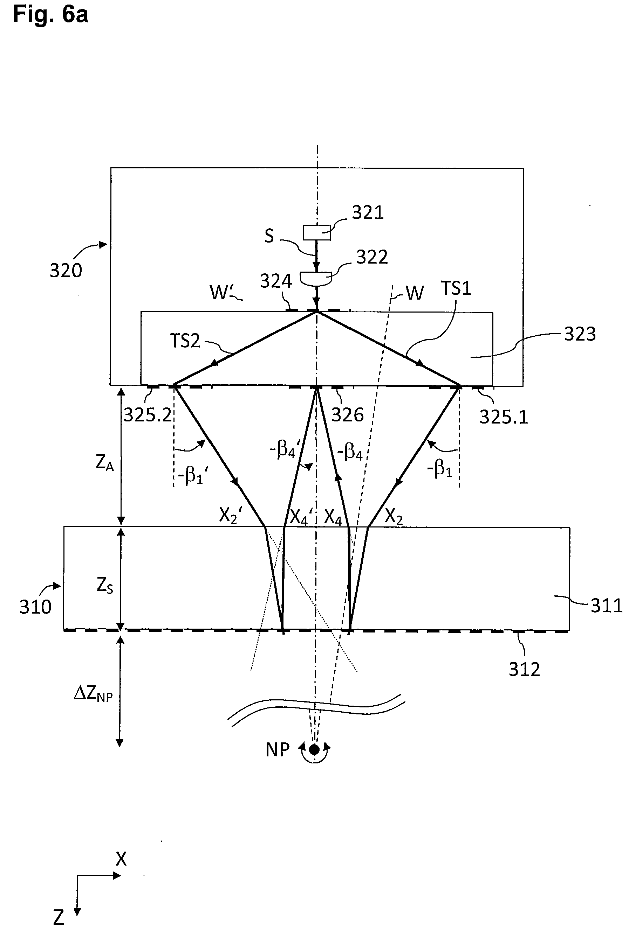

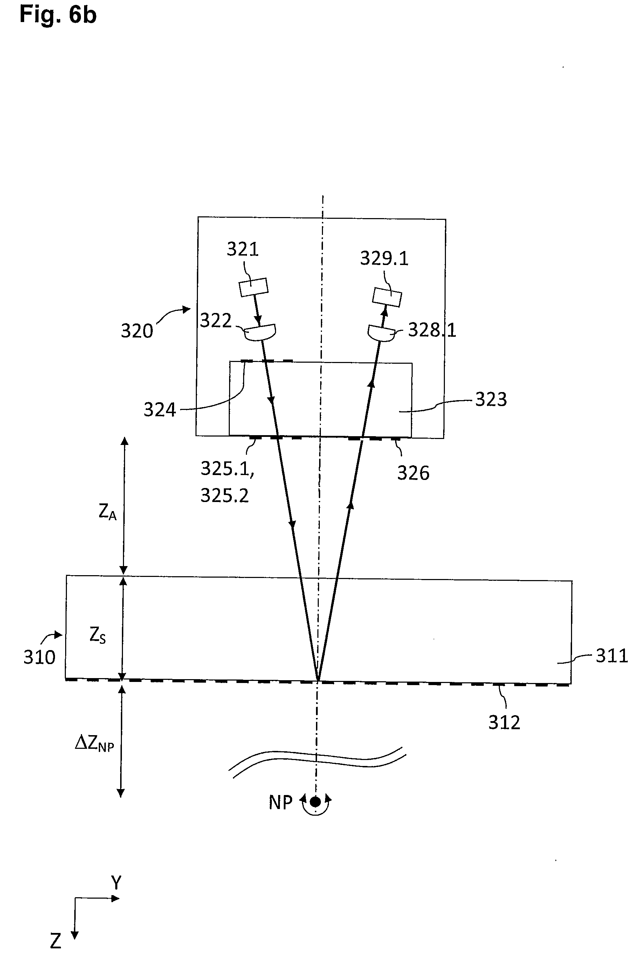

Ein zweites Ausführungsbeispiel der erfindungsgemäßen Positionsmesseinrichtung ist in Figur 6a in einer XZ-Projektion und in Figur 6b in einer YZ-Projektion dargestellt. Es ähnelt dem ersten Ausführungsbeispiel; nachfolgend seien lediglich die maßgeblichen Unterschiede hierzu erwähnt.

Die Teilstrahlenbündel TS1 werden in dieser Variante nur einmal an der Maßverkörperung 310 reflektiert. Wiederum wird das Strahlenbündel S einer Lichtquelle 321 über eine Kollimatoroptik 322 kollimiert und durch ein Aufspaltgitter 324 in zwei Teilstrahlenbündel TS1, TS2 aufgeteilt. Über die wiederum als Ablenkelement fungierenden Gitter 325.1, 325.2 werden die Teilstrahlenbündel TS1, TS2 nach innen in Richtung der optischen Achse Z abgelenkt bevor sie auf die Maßverkörperung 310 treffen, die wiederum als Rückflächengitter ausgebildet ist. Dort werden sie in +1. bzw. -1. Beugungsordnung nach außen von der optischen Achse Z reflektierend weg gebeugt und treffen an der Unterseite der Abtastplatte 323 am Ort der optischen Achse Z auf ein Vereinigungsgitter 326. Die drei, in resultierender -1., 0. und +1. Beugungsordnung austretenden, überlagerten Strahlenbündel werden wiederum durch drei zugehörige Detektorelemente, von denen in Figur 6b lediglich eine einziges Detektorelement 329.1 erkennbar ist, in entsprechende Abtastsignale gewandelt.

Die Besonderheit an diesem Ausführungsbeispiel ist, dass nur ein Ablenkelement pro Teilstrahlenbündel TS1, TS2 - hier in Form der Gitter 325.1, 325.2 - erforderlich ist, was der minimal möglichen Zahl von Ablenkelementen entspricht. Zusammen mit der Beugung am Aufspaltgitter 324, am Reflexionsgitter 312 der Maßverkörperung 310 und am Vereinigungsgitter 326 sind nur vier Beugungen pro Teilstrahlenbündel TS1, TS2 notwendig. Dadurch wird die Signalstärke deutlich erhöht. Eine hohe Signalstärke ist besonders wichtig, wenn als Maßverkörperung ein Kreuzgitter eingesetzt wird, das nur einen kleinen Teil der einfallenden Lichtleistung in die gewünschte Beugungsordnung zurückreflektiert.

Neben den konkret beschriebenen Ausführungsbeispielen existieren im Rahmen der vorliegenden Erfindung selbstverständlich noch weitere Ausgestaltungsmöglichkeiten. Bevor auf diese im Einzelnen kurz eingegangen wird, sei darauf hingewiesen, dass es selbstverständlich möglich ist, Maßnahmen aus den verschiedenen erläuterten Ausführungsbeispielen geeignet miteinander zu kombinieren.

Darüber hinaus lässt sich die vorliegende Erfindung in vielen verschiedenen Ausführungsformen realisieren. So kann beispielsweise der Strahlengang vom Aufspaltgitter bis zum Vereinigungsgitter auch in der umgekehrten Reihenfolge durchlaufen werden. Bei der zweiten optischen Positionsmesseinrichtung und dem zweiten Ausführungsbeispiel führt das zu weiteren, gleichwertigen Lösungen.

Auch können statt dem Aufspalt- und Vereinigungsgitter alternative optische Bauelemente eingesetzt werden, wie z.B. Strahlteilerwürfel oder teiltransparente Spiegel. Als alternative Ablenkelemente sind vor allem auch Spiegel und Prismen denkbar. Besonders vorteilhaft ist es, als Ablenkelemente geblazte Gitter zu verwenden, die hohe Beugungseffizienten in der gewünschten Beugungsordnung haben. Natürlich ist es auch möglich, mit Hilfe von Spiegeln beide Teilstrahlenbündel gleichermaßen abzulenken und damit den Strahlengang zu falten. Dies kann für eine besonders kleine Bauform vorteilhaft sein.

Darüber hinaus können natürlich auch andere bekannte Möglichkeiten zur Erzeugung phasenverschobener Abtastsignale eingesetzt werden. Insbesondere können polarisierende Elemente in den Strahlengang der beiden Teilstrahlenbündel eingefügt werden, um diese orthogonal zueinander, vorzugsweise linear oder zirkular, zu polarisieren. Durch polarisationsoptische Bauelemente wie Polarisatoren, Verzögerungsplatten und polarisierende Strahlteiler lassen sich in bekannter Weise die beiden orthogonal polarisierten Teilstrahlenbündel so überlagern, dass phasenverschobene Abtastsignale resultieren. Daneben ist auch die Erzeugung eines Streifenmusters möglich, das sich bei einer relativen Änderung der Phasen der Teilstrahlenbündel verschiebt und durch streifenförmig strukturierte Detektoren in phasenverschobene Abtastsignale gewandelt wird.

Als vorteilhafte Lichtquellen sind Halbleiterlaser und LEDs in der erfindungsgemäßen Positionsmesseinrichtung einsetzbar. Diese Lichtquellen können grundsätzlich auch ohne nachgeordnete Kollimatoroptik eingesetzt werden. In diesem Fall muss der Hauptstrahl des divergenten oder konvergenten Lichtbündels herangezogen werden, um die obigen, erfindungsgemäßen Bedingungen entsprechend übertragen zu können.

**Patentansprüche**

1. Optische Positionsmesseinrichtung zur Erfassung der Relativposition einer Maßverkörperung (210; 310) und mindestens eines Abtastkopfes (220; 320), die entlang mindestens einer Messrichtung (x) zueinander relativ beweglich sind, wobei die optische Abtastung derart ausgebildet ist, dass der effektive Messpunkt (NP) der Abtastung in einem definierten Abstand ($\Delta Z_{NP}$) in derjenigen Richtung beabstandet von der Maßverkörperung (210; 310) liegt, die abgewandt zum Abtastkopf (220; 320) orientiert ist, wobei der effektive Messpunkt demjenigen Punkt entspricht, um den Kippungen des Abtastkopfes (220; 320) oder der Maßverkörperung (210; 310) in linearer Näherung nicht zu einer Verschiebung des Positionsmesswertes führen, und

   - zur optischen Abtastung der Maßverkörperung (210; 310) ein Strahlenbündel (S) eine Aufspaltung in zwei Teilstrahlenbündel (TS1, TS2) erfährt, jedes der beiden Teilstrahlenbündel (TS1, TS2) nur einmal ein Reflexionsgitter (212; 312) der Maßverkörperung (210; 310) beaufschlagt und darüber eine Beugung derart erfährt, dass eine Winkelhalbierende (W, W') zwischen dem auf das Reflexionsgitter (212; 312) einfallenden und dem darüber zurückreflektierten Teilstrahlenbündel (TS1, TS2) eine optische Achse in einem Punkt schneidet, der auf der zum Abtastkopf (220; 320) abgewandten Seite der Maßverkörperung (210; 310) liegt und welcher den effektiven Messpunkt (NP) der Abtastung darstellt und
   - mindestens vor einem Beaufschlagen des Reflexionsgitters (212; 312) eine Aufspaltung des Strahlenbündels (S) in die zwei Teilstrahlenbündel (TS1, TS2) erfolgt und
   - bei einer erfolgenden Beugung am Reflexionsgitter (212; 312) jeweils eine Umlenkung der Teilstrahlenbündel (TS1, TS2) von der optischen Achse weg erfolgt und
   - über mindestens ein Ablenkelement eine Umlenkung zurück zur optischen Achse erfolgt, wo die Teilstrahlenbündel (TS1, TS2) zur Wiedervereinigung kommen.

2. Optische Positionsmesseinrichtung nach Anspruch 1, wobei die aufgespalten Teilstrahlenbündel (TS1, TS2) zwischen Aufspaltung und Wiedervereinigung symmetrisch in Bezug auf die optische Achse verlaufen.

3. Optische Positionsmesseinrichtung nach mindestens einem der vorhergehenden Ansprüche, wobei die Maßverkörperung (210; 310) als Rückflächengitter ausgebildet ist und ein plattenförmiges, transparentes Substrat (221; 321) sowie das Reflexionsgitter (212; 312) umfasst, dessen reflektierende Seite in Richtung des Substrats (221; 321) und in Richtung des Abtastkopfes (220; 320) orientiert ist.

4. Optische Positionsmesseinrichtung nach mindestens einem der Ansprüche 1 - 3, wobei die Maßverkörperung als Vorderflächengitter ausgebildet ist und ein Reflexionsgitter umfasst, dessen reflektierende Seite in Richtung des Abtastkopfes orientiert ist.

5. Optische Positionsmesseinrichtung nach mindestens einem der vorhergehenden Ansprüche, wobei

   - die Maßverkörperung gegenüber einem ersten Abtastkopf entlang einer ersten Messrichtung relativ beweglich angeordnet ist und
   - die Maßverkörperung gegenüber einem zweiten Abtastkopf entlang einer zweiten Messrichtung beweglich angeordnet ist, wobei die zweite Messrichtung orthogonal zur ersten Messrichtung orientiert ist.

6. Optische Positionsmesseinrichtung nach Anspruch 5, wobei die Maßverkörperung gegenüber einem dritten Abtastkopf entlang der ersten oder zweiten Messrichtung beweglich angeordnet ist.

7. Optische Positionsmesseinrichtung nach Anspruch 5, wobei die Maßverkörperung als Kreuzgitter ausgebildet ist.

8. Optische Positionsmesseinrichtung nach mindestens einem der vorhergehenden Ansprüche, wobei der Abtastkopf (220; 320) eine Lichtquelle (221; 321), mehrere Detektorelemente (229.1 - 229.3; 329.1) sowie eine Abtastplatte (223; 323) umfasst, die auf einer Seite ein Aufspaltgitter (224; 324) sowie ein Vereinigungsgitter (227; 326) und auf der entgegengesetzten Seite mehrere weitere Gitter (225.1 - 225.4; 325.1 - 325.4) aufweist, so dass

- ein von der Lichtquelle (221; 321) emittiertes Strahlenbündel (S) über das Aufspaltgitter (224; 324) eine Aufspaltung in zwei Teilstrahlenbündel (TS1, TS2) erfährt,
- die Teilstrahlenbündel (TS1, TS2) dann jeweils in Richtung eines Gitters (225.1, 225.2; 325.1, 325.2) auf der gegenüberliegenden Seite der Abtastplatte (223; 323) propagieren und darüber jeweils eine Ablenkung in Richtung der optischen Achse erfahren,
- dann in Richtung der Maßverkörperung (210; 310) weiterpropagieren, wo eine Beugung und Rückreflexion in Richtung des Abtastkopfes (220; 320) resultiert,
- die Teilstrahlenbündel (TS1, TS2) jeweils über weitere Gitter (225.3, 225.4; 325.3, 325.4) eine Ablenkung in Richtung der optischen Achse erfahren und in Richtung des Vereinigungsgitters (227; 326) auf der gegenüberliegenden Seite der Abtastplatte (223; 323) propagieren, wo sie zur interferierenden Überlagerung gelangen und
- überlagerte Teilstrahlenbündel vom Vereinigungsgitter (227; 326) in Richtung der Detektorelemente (229.1 - 229.3; 329.1) propagieren, über die phasenverschobene Abtastsignale erfassbar sind.

## Claims

1. Optical position measuring device for detecting the relative position between a measurement standard (210; 310) and at least one scanning head (220; 320), which are movable relative to one another along at least one measurement direction (x), wherein the optical scanning means are embodied in such a way that the effective measurement point (NP) of the scan lies spaced apart at a defined distance ($\Delta Z_{NP}$) from the measurement standard (210; 310) in the direction which is oriented facing away from the scanning head (220; 320), wherein the effective measurement point corresponds to that point about which tilting of the scanning head (220; 320) or of the measurement standard (210; 310) does not lead to a displacement of the position measurement value to a linear approximation, and

- a beam (S) experiences splitting into two partial beams (TS1, TS2) for optical scanning of the measurement standard (210; 310), with each one of the two partial beams (TS1, TS2) only impinging once on a reflection grating (212; 312) of the measurement standard (210; 310) and, thereby, experiencing a diffraction in such a way that an angular bisector (W, W') between the partial beam (TS1, TS2) incident on the reflection grating (212; 312) and the partial beam reflected therefrom intersects an optical axis at a point lying on the side of the measurement standard (210; 310) facing away from the scanning head (220; 320) and representing the effective measurement point (NP) of the scan, and
- the beam (S) is split into the two partial beams (TS1, TS2) at least prior to an impingement on the reflection grating (212; 312) and
- the partial beams (TS1, TS2) are respectively deflected away from the optical axis during a diffraction at the reflection grating (212; 312) and
- there is a deflection back to the optical axis, where the partial beams (TS1, TS2) are reunited, by way of at least one deflection element.

2. Optical position measuring device according to Claim 1, wherein the split partial beams (TS1, TS2) run symmetrically in respect of the optical axis between splitting and reunification.

3. Optical position measuring device according to at least one of the preceding claims, wherein the measurement standard (210; 310) is embodied as a rear-face grating and it comprises a plate-shaped, transparent substrate (221; 321) and the reflection grating (212; 312), the reflecting side of which is oriented in the direction of the substrate (221; 321) and in the direction of the scanning head (220; 320).

4. Optical position measuring device according to at least one of Claims 1-3, wherein the measurement standard is embodied as a front-face grating and it comprises a reflection grating, the reflecting side of which is oriented in the direction of the scanning head.

5. Optical position measuring device according to at least one of the preceding claims, wherein

   - the measurement standard is arranged in a relatively movable manner along a first measurement direction in relation to a first scanning head and
   - the measurement standard is arranged in a movable manner along a second measurement direction in relation to a second scanning head, wherein the second measurement direction is oriented orthogonally in relation to the first measurement direction.

6. Optical position measuring device according to Claim 5, wherein the measurement standard is arranged in a movable manner along the first or second measurement direction in relation to a third scanning head.

7. Optical position measuring device according to Claim 5, wherein the measurement standard is embodied as a cross grating.

8. Optical position measuring device according to at least one of the preceding claims, wherein the scanning head (220; 320) comprises a light source (221; 321), a plurality of detector elements (229.1-229.3; 329.1) and a scanning plate (223 ; 323), which has a splitting grating (224; 324) and a unification grating (227; 326) on one side and a plurality of further gratings (225.1-225.4; 325.1-325.4) on the opposite side, such that

   - a beam (S) emitted by the light source (221; 321) experiences splitting into two partial beams (TS1, TS2) by way of the splitting grating (224; 324),
   - the partial beams (TS1, TS2) then respectively propagate in the direction of a grating (225.1, 225.2; 325.1, 325.2) on the opposite side of the scanning plate (223; 323) and, thereby, each experiences a deflection in the direction of the optical axis,
   - said partial beams then propagate onward in the direction of the measurement standard (210; 310), where there is a diffraction and return reflection in the direction of the scanning head (220; 320),
   - the partial beams (TS1, TS2) each experience a deflection in the direction of the optical axis by further gratings (225.3, 225.4; 325.3, 325.4) and propagate in the direction of the unification grating (227; 326) on the opposite side of the scanning plate (223; 323), where they reach interfering superposition and
   - superposed partial beams propagate from the unification grating (227; 326) in the direction of the detector elements (229.1-229.3; 329.1), by means of which phase-shifted scanning signals are detectable.

## Revendications

1. Dispositif de mesure de position optique destiné à détecter la position relative d'un étalon (210 ; 310) et d'au moins une tête de palpage (220 ; 320), lesquels sont mobiles l'un par rapport à l'autre le long d'au moins une direction de mesure (x), le palpage optique étant configuré de telle sorte que le point de mesure effectif (NP) du palpage se trouve à un écart défini ($\Delta Z_{NP}$) de l'étalon (210 ; 310) dans la direction qui est orientée à l'opposé de la tête de palpage (220 ; 320), le point de mesure effectif correspondant au point autour duquel les basculements de la tête de palpage (220 ; 320) ou de l'étalon (210 ; 310) en approche linéaire n'entraînent pas un décalage de la valeur mesurée de la position, et

   - en vue du palpage optique de l'étalon (210 ; 310), un faisceau de rayons (S) subit un dédoublement en deux faisceaux de rayons partiels (TS1, TS2), chacun des deux faisceaux de rayons partiels (TS1, TS2) ne chargeant qu'une seule fois une grille de réflexion (212 ; 312) de l'étalon (210 ; 310) et subissant sur celle-ci une diffraction de telle sorte qu'une bissectrice (W, W') entre le faisceau de rayons partiels (TS1, TS2) incident sur la grille de réflexion (212 ; 312) et celui qui est réfléchi sur celle-ci croise un axe optique à un point qui se trouve du côté de l'étalon (210 ; 310) à l'opposé de la tête de palpage (220 ; 320) et qui représente le point de mesure effectif (NP) du palpage et
   - un dédoublement du faisceau de rayons (S) en les deux faisceaux de rayons partiels (TS1, TS2) a lieu au moins avant de charger la grille de réflexion (212 ; 312) et
   - lorsqu'une diffraction a eu lieu sur la grille de réflexion. (212 ; 312), une déviation des rayons partiels (TS1, TS2) à l'écart de l'axe optique a lieu et
   - une déviation en retour vers l'axe optique a lieu par le biais d'au moins un élément déflecteur là où les faisceaux de rayons partiels (TS1, TS2) se combinent de nouveau.

**2.** Dispositif de mesure de position optique selon la revendication 1, avec lequel les faisceaux de rayons partiels (TS1, TS2) dédoublés se propagent de manière symétrique par rapport à l'axe optique entre le dédoublement et la recombinaison.

**3.** Dispositif de mesure de position optique selon au moins l'une des revendications précédentes, avec lequel l'étalon (210 ; 310) est réalisé sous la forme d'une grille de face arrière et comprend un substrat transparent (221 ; 321) en forme de plaque ainsi que la grille de réflexion (212 ; 312), dont le côté réfléchissant est orienté en direction du substrat (221 ; 321) et en direction de la tête de palpage (220 ; 320).

**4.** Dispositif de mesure de position optique selon au moins l'une des revendications 1 à 3, avec lequel l'étalon est réalisé sous la forme d'une grille de face avant et comprend une grille de réflexion dont le côté réfléchissant est orienté en direction de la tête de palpage.

**5.** Dispositif de mesure de position optique selon au moins l'une des revendications précédentes, avec lequel

- l'étalon est disposé avec une mobilité relative par rapport à une première tête de palpage le long d'une première direction de mesure et
- l'étalon est disposé de façon mobile par rapport à une deuxième tête de palpage le long d'une deuxième direction de mesure, la deuxième direction de mesure étant orientée de manière orthogonale par rapport à la première direction de mesure.

**6.** Dispositif de mesure de position optique selon la revendication 5, avec lequel l'étalon est disposé de façon mobile par rapport à une troisième tête de palpage le long de la première ou de la deuxième direction de mesure.

**7.** Dispositif de mesure de position optique selon la revendication 5, avec lequel l'étalon est réalisé sous la forme d'une grille croisée.

**8.** Dispositif de mesure de position optique selon au moins l'une des revendications précédentes, avec lequel la tête de palpage (220 ; 320) comprend une source de lumière (221 ; 321), plusieurs éléments de détection (229.1 - 229.3 ; 329.1) ainsi qu'une plaque de palpage (223 ; 323), qui possède d'un côté une grille de dédoublement (224 ; 324) ainsi qu'une grille de combinaison (227 ; 326) et, du côté opposé, plusieurs grilles supplémentaires (225.1 - 225.4 ; 325.1 - 325.4), de sorte

- qu'un faisceau de rayons (S) émis depuis la source de lumière (221 ; 321) subit par le biais de la grille de dédoublement (224 ; 324) un dédoublement en deux faisceaux de rayons partiels (TS1, TS2),
- les faisceaux de rayons partiels (TS1, TS2) se propagent alors respectivement en direction d'une grille (225.1, 225.2 ; 325.1, 325.2) sur le côté opposé de la plaque de palpage (223 ; 323) et subissent sur celle-ci respectivement une déviation en direction de l'axe optique,
- continuent alors de se propager en direction de l'étalon (210 ; 310), où il en résulte une diffraction et une réflexion vers l'arrière en direction de la tête de palpage (220 ; 320),
- les faisceaux de rayons partiels (TS1, TS2) subissent, respectivement par le biais d'une grille supplémentaire (225.3, 225.4 ; 325.3, 325.4), une déviation en direction de l'axe optique et se propagent en direction de la grille de combinaison (227 ; 326) sur le côté opposé de la plaque de palpage (223 ; 323), où ils passent en superposition interférante et
- les faisceaux de rayons partiels superposés se propagent de la grille de combinaison (227 ; 326) en direction des éléments de détection (229.1 - 229.3 ; 329.1), par le biais desquels peuvent être détectés des signaux de palpage déphasés.

**Fig. 1**

# Fig. 2

# Fig. 3a

# Fig. 3b

**Fig. 3c**

# Fig. 4

## Fig. 5a

# Fig. 5b

# Fig. 5c

# Fig. 6a

**Fig. 6b**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2011068254 A1
- EP 2068112 A1
- EP 1901041 A1
- DE 102007023300 A1